# EUROPEAN PATENT SPECIFICATION

(11) **EP 3 565 303 B1**
(45) Date of publication and mention of the grant of the patent: **27.10.2021**
(21) Application number: 17893017.8
(22) Date of filing: 19.01.2017
(51) Int. Cl.: H04W 28/02

(54) **DATA PACKET TRANSMISSION METHOD AND TERMINAL**
DATENPAKETÜBERTRAGUNGSVERFAHREN UND -ENDGERÄT
PROCÉDÉ DE TRANSMISSION DE PAQUET DE DONNÉES, ET TERMINAL

(43) Date of publication of application: 06.11.2019
(73) Proprietor: Huawei Technologies Co., Ltd., Longgang Shenzhen, Guangdong 518129 (CN)
(72) Inventor: ZHAO, Zhenshan, Shenzhen Guangdong 518129 (CN); SHI, Yi, Shenzhen Guangdong 518129 (CN); LIU, Deping, Shenzhen Guangdong 518129 (CN)
(74) Representative: Maiwald Patent- und Rechtsanwaltsgesellschaft mbH
(86) International application number: PCT/CN2017/071624
(87) International publication number: WO 2018/132988

(56) References cited:
- CN-A- 102 754 512
- CN-A- 104 486 796
- US-A1- 2015 071 061
- US-B2- 9 474 078
- QUALCOMM INCORPORATED: "Congestion control for V2V", 3GPP DRAFT; R2-168593_V2V_DCC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051178163, Retrieved from the Internet: URL:http://www.3gpp.org/ftp/Meetings_3GPP_ SYNC/RAN2/Docs/ [retrieved on 2016-11-13]
- INTEL CORPORATION: "On Sensing Design Details for Sidelink V2V Communication", 3GPP DRAFT; R1-162363 INTEL - V2V SENSING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080142, Retrieved from the Internet: URL:http://www.3gpp.org/ftp/tsg_ran/WG1_RL 1/TSGR1_84b/Docs/ [retrieved on 2016-04-02]
- NOKIA ET AL: "On congestion control for V2V communication", 3GPP DRAFT; R1-1609788-CONGESTIONCONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159668, Retrieved from the Internet: URL:http://www.3gpp.org/ftp/tsg_ran/WG1_RL 1/TSGR1_86b/Docs/ [retrieved on 2016-10-01]
- SAMSUNG: "Discussion on congestion control", 3GPP DRAFT; R1-1612392 CONGESTION CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevada, USA; 20161114 - 20161118 13 November 2016 (2016-11-13), XP051176340, Retrieved from the Internet: URL:http://www.3gpp.org/ftp/Meetings_3GPP_ SYNC/RAN1/Docs/ [retrieved on 2016-11-13]

## Description

### TECHNICAL FIELD

This application relates to the communications field, and more specifically, to a data packet transmission method and a terminal.

### BACKGROUND

In a current communications system, if there is a large quantity of terminals that access the communications system, the communications system may be congested, and consequently, overall performance of the communications system degrades. To ensure the performance of the communications system, a congestion control mechanism is introduced. When the congestion control mechanism is activated, a terminal needs to measure current resource utilization (for example, channel busy ratio (CBR)) before transmitting a data packet of a semi-persistent transmission (SPT) service each time in a plurality of transmission periods in which data packets are transmitted in an SPT manner. In addition, the terminal further needs to determine transmission resource utilization in a transmission period in which the data packet of the SPT service has been transmitted, so as to determine whether continuing to use a same transmission resource to transmit the data packet of the SPT service exceeds a transmission resource utilization threshold (for example, a channel resource utilization (CR) limit). If a sum of transmission resource utilization for continuing to use the same transmission resource to transmit the data packet of the SPT service and transmission resource utilization for having transmitted the data packet of the SPT service exceeds the transmission resource utilization threshold, the terminal discards a data packet of a current SPT service or performs resource reselection, thereby reducing transmission resource utilization, so that the transmission resource utilization is less than or equal to the transmission resource utilization threshold.

The article by QUALCOMM INCORPORATED, titled "Congestion control for V2V", vol. RAN WG2, no. Reno, USA; 20161114 - 20161118, (20161113), 3GPP DRAFT; R2-168593_V2V_DCC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, describes systems, methods and techniques for ccongestion control for V2V

However, in the congestion control mechanism, the terminal needs to measure resource utilization in a transmission period of each SPT service, determine a transmission resource utilization threshold based on each measured resource utilization, and further determine, based on the transmission resource utilization threshold, a target transmission resource for transmitting a data packet. In other words, in the congestion control mechanism, an operation procedure in which the terminal determines the target transmission resource is relatively complex.

### SUMMARY

This application provides a data packet transmission method and a terminal as defined by the independent claims 1 and 6, so as to simplify an operation procedure in which a terminal determines a target transmission resource in a congestion control mechanism. The invention is defined in the appended set of claims.

Herein described is a data packet transmission method, including: determining, by a terminal, a transmission resource utilization threshold, where the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool; selecting, by the terminal, a target transmission resource in a first time period from the resource pool based on the transmission resource utilization threshold, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet; and sending, by the terminal, the to-be-transmitted data packet on the target transmission resource.

Herein described is, the terminal may select the target transmission resource by using a transmission resource utilization threshold in the first time period. To be specific, the terminal may not need to periodically measure the resource utilization using a transmission period of a data packet as a period, thereby avoiding a problem in the prior art that the terminal needs to measure the resource utilization in each transmission period of the data packet, and simplifying an operation procedure in which the terminal determines the target transmission resource in a congestion control mechanism.

Herein described is, the first time period includes a plurality of transmission periods of the to-be-transmitted data packets.

Herein described is, the first time period may include the plurality of transmission periods for transmitting the to-be-transmitted data packets. The terminal may determine a transmission resource utilization threshold of the entire first time period based on the resource utilization of the first time period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one first time period. In the first time period, the transmission resource utilization threshold does not vary with the resource utilization. This avoids the following case: In the prior art, when a change in the resource utilization causes a decrease in the transmission resource utilization threshold of the terminal and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one first time period. In the first time period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Herein described is the second time period is the same as the first time period.

Herein described is, the second time period is the same as the first time period, and a time length of the first time is a time length of a reservation period. The first time period includes a plurality of transmission periods of to-be-transmitted data packets.

Herein described is, the reservation period may include the plurality of transmission periods for transmitting the to-be-transmitted data packets. The terminal may determine a transmission resource utilization threshold of the entire reservation period based on the resource utilization of the reservation period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one reservation period. In the reservation period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one reservation period. In the reservation period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, an end moment of the second time period is the same as that of the first time period.

Optionally, the determining, by a terminal, a transmission resource utilization threshold includes: determining, by the terminal, the transmission resource utilization threshold at a start moment of the first time period.

Optionally, the start moment of the first time period is a moment at which the terminal performs resource selection or resource reselection.

Optionally, the start moment of the first time period is a moment at which a value of a counter of the terminal is zero, and the value of the counter is used to indicate a quantity of the to-be-transmitted data packets in a preset time period.

Further, the counter may be a sidelink resource reselection counter .

Optionally, the start moment of the first time period is a moment at which the to-be-transmitted data packet is mapped to a logical channel of the terminal.

Optionally, the resource utilization may be a CBR, and the transmission resource utilization threshold may be a CR limit.

Optionally, the to-be-transmitted data packet may be a periodically transmitted data packet, for example, a data packet of an SPT service.

Herein described is, the to-be-transmitted data packet is a data packet of a semi-persistent transmission SPT service, and the SPT service to which the to-be-transmitted data packet belongs includes at least one SPT service.

In the first time period, data packets of at least one SPT service share one transmission resource utilization threshold, thereby avoiding a problem in the prior art that a transmission resource utilization threshold needs to be determined in each data packet transmission, and simplifying an operation procedure in which the terminal transmits a data packet in a congestion control mechanism.

Herein described is, the SPT service to which the to-be-transmitted data packet belongs includes a plurality of SPT services, and the sending, by the terminal, the to-be-transmitted data packet on the target transmission resource includes: sending, by the terminal, data packets of at least some of the plurality of SPT services in descending order of priorities of the plurality of SPT services on the target transmission resource.

Sending the data packets of at least some of the plurality of SPT services in descending order of the priorities of the plurality of SPT services meets the transmission resource utilization threshold, and ensures that a data packet of an SPT service with a high priority is sent first, so as to meet a transmission requirement of a data packet with a high priority.

Herein described is, the method further includes: determining, by the terminal, that utilization of a transmission resource required for transmitting an SPT service whose priority is higher than a priority threshold in the plurality of SPT services is higher than the transmission resource utilization threshold; and sending, by the terminal, request information to a base station, where the request information is used to request the base station to allocate a transmission resource to the SPT service whose priority is higher than the priority threshold in the plurality of SPT services.

Sending the request information to the base station, and requesting the base station to allocate a transmission resource to the SPT service whose priority is higher than the priority threshold in the plurality of SPT services meet the transmission resource utilization threshold, and ensure that a data packet of an SPT service with a high priority is first sent, so as to meet a transmission requirement of a data packet with a high priority.

Herein described is, the method further includes: obtaining, by the terminal based on the resource utilization, a transmission parameter for transmitting the to-be-transmitted data packet; and the sending, by the terminal, the to-be-transmitted data packet on the target transmission resource includes: sending, by the terminal, the to-be-transmitted data packet on the target transmission resource by using the transmission parameter.

Herein described is, the selecting, by the terminal, a target transmission resource from the resource pool based on the transmission resource utilization threshold includes: selecting, by the terminal, the target transmission resource from the resource pool based on the transmission resource utilization threshold and the transmission parameter for transmitting the to-be-transmitted data packet.

Selecting, by the terminal, the target transmission resource from the resource pool based on the transmission resource utilization threshold and the transmission parameter for transmitting the to-be-transmitted data packet meets the transmission resource utilization threshold and makes the selected target transmission resource more proper.

Herein described is, in the first time period, the transmission resource utilization threshold decreases, but the terminal does not reselect a transmission resource from the resource pool.

Herein described is, that the terminal obtains a transmission resource utilization threshold based on the resource utilization includes: determining, by the terminal, the transmission resource utilization threshold based on the resource utilization and a mapping relationship between the resource utilization and the transmission resource utilization threshold.

The terminal independently determines the transmission resource utilization threshold based on the resource utilization and the mapping relationship between the resource utilization and the transmission resource utilization threshold, so as to reduce signaling interaction between the terminal and the base station, and reduce signaling overheads when the terminal determines the transmission resource utilization threshold.

Herein described is, that the terminal obtains a transmission resource utilization threshold based on the resource utilization includes: sending, by the terminal, the resource utilization to a base station; and receiving, by the terminal, the transmission resource utilization threshold sent by the base station.

The transmission resource utilization threshold is determined through signaling interaction between the terminal and the base station. This lowers a requirement for a capability of the terminal when the transmission resource utilization threshold is determined.

Herein described is a terminal. The terminal includes: a determining unit, configured to determine a transmission resource utilization threshold, where the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool; a selection unit, configured to select a target transmission resource in a first time period from the resource pool based on the transmission resource utilization threshold determined by the determining unit, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet; and a sending unit, configured to send the to-be-transmitted data packet on the target transmission resource selected by the selection unit.

Herein described is, the terminal may select the target transmission resource by using a transmission resource utilization threshold in the first time period. To be specific, the terminal may not need to periodically measure the resource utilization using a transmission period of a data packet as a period, thereby avoiding a problem in the prior art that the terminal needs to measure the resource utilization in each transmission period of the data packet, and simplifying an operation procedure in which the terminal determines the target transmission resource in a congestion control mechanism.

Optionally, the first time period includes a plurality of transmission periods of the to-be-transmitted data packets.

In this embodiment of this application, the first time period may include the plurality of transmission periods for transmitting the to-be-transmitted data packets. The terminal may determine a transmission resource utilization threshold of the entire first time period based on the resource utilization of the first time period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one first time period. In the first time period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one first time period. In the first time period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, the second time period is the same as the first time period.

Optionally, the second time period is the same as the first time period, and a time length of the first time is a time length of a reservation period. The first time period includes a plurality of transmission periods of to-be-transmitted data packets.

In this embodiment of this application, the reservation period may include the plurality of transmission periods for transmitting the to-be-transmitted data packets. The terminal may determine a transmission resource utilization threshold of the entire reservation period based on the resource utilization of the reservation period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one reservation period. In the reservation period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one reservation period. In the reservation period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, an end moment of the second time period is the same as that of the first time period.

Optionally, a start moment of the first time period is a moment at which the terminal performs resource selection or resource reselection.

Optionally, the start moment of the first time period is a moment at which a value of a counter of the terminal is zero, and the value of the counter is used to indicate a quantity of the to-be-transmitted data packets in a preset time period.

Further, the counter may be a sidelink resource reselection counter .

Optionally, the start moment of the first time period is a moment at which the to-be-transmitted data packet is mapped to a logical channel of the terminal.

Optionally, the resource utilization may be a CBR, and the transmission resource utilization threshold may be a CR limit.

Optionally, the to-be-transmitted data packet may be a periodically transmitted data packet, for example, a data packet of an SPT service.

Herein described is, the to-be-transmitted data packet is a data packet of a semi-persistent transmission SPT service, and the SPT service to which the to-be-transmitted data packet belongs includes at least one SPT service.

In the first time period, data packets of at least one SPT service share one transmission resource utilization threshold, thereby avoiding a problem in the prior art that a transmission resource utilization threshold needs to be determined in each data packet transmission, and simplifying an operation procedure in which the terminal transmits a data packet in a congestion control mechanism.

Herein described is, the SPT service to which the to-be-transmitted data packet belongs includes a plurality of SPT services, and the sending unit is specifically configured to send data packets of at least some of the plurality of SPT services in descending order of priorities of the plurality of SPT services on the target transmission resource.

Sending the data packets of at least some of the plurality of SPT services in descending order of the priorities of the plurality of SPT services meets the transmission resource utilization threshold, and ensures that a data packet of an SPT service with a high priority is sent first, so as to meet a transmission requirement of a data packet with a high priority.

Herein described is, the SPT service to which the to-be-transmitted data packet belongs includes the plurality of SPT services; the determining unit is further configured to determine that utilization of a transmission resource required for transmitting an SPT service whose priority is higher than a priority threshold in the plurality of SPT services is higher than the transmission resource utilization threshold; and the sending unit is further configured to send request information to a base station, where the request information is used to request the base station to allocate a transmission resource to the SPT service whose priority is higher than the priority threshold in the plurality of SPT services.

Sending the request information to the base station, and requesting the base station to allocate a transmission resource to the SPT service whose priority is higher than the priority threshold in the plurality of SPT services meet the transmission resource utilization threshold, and ensure that a data packet of an SPT service with a high priority is first sent, so as to meet a transmission requirement of a data packet with a high priority.

Herein described is, the terminal further includes: an obtaining unit, configured to obtain, based on the resource utilization, a transmission parameter for transmitting the to-be-transmitted data packet; and the sending unit is specifically configured to send the to-be-transmitted data packet on the target transmission resource by using the transmission parameter.

Herein described is, the selection unit is specifically configured to select the target transmission resource in the first time period from the resource pool based on the transmission resource utilization threshold and the transmission parameter for transmitting the to-be-transmitted data packet.

Selecting, by the terminal, the target transmission resource from the resource pool based on the transmission resource utilization threshold and the transmission parameter for transmitting the to-be-transmitted data packet meets the transmission resource utilization threshold and makes the selected target transmission resource more proper.

Herein described is, the obtaining unit is specifically configured to determine the transmission resource utilization threshold based on the resource utilization and a mapping relationship between the resource utilization and the transmission resource utilization threshold.

The terminal independently determines the transmission resource utilization threshold based on the resource utilization and the mapping relationship between the resource utilization and the transmission resource utilization threshold, so as to reduce signaling interaction between the terminal and the base station, and reduce signaling overheads when the terminal determines the transmission resource utilization threshold.

Herein described is, the obtaining unit is specifically configured to: send the resource utilization to a base station; and receive the transmission resource utilization threshold sent by the base station.

The transmission resource utilization threshold is determined through signaling interaction between the terminal and the base station. This lowers a requirement for a capability of the terminal when the transmission resource utilization threshold is determined.

Herein described is a data packet transmission terminal, where the terminal includes a memory, a processor, an input/output interface, and a communications interface. The processor is configured to determine a transmission resource utilization threshold, where the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool; and the processor is further configured to select a target transmission resource in a first time period from the resource pool based on the transmission resource utilization threshold, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet. The communications interface is configured to send the to-be-transmitted data packet on the target transmission resource.

Herein described is, the terminal may select the target transmission resource by using a transmission resource utilization threshold in the first time period. To be specific, the terminal may not need to periodically measure the resource utilization using a transmission period of a data packet as a period, thereby avoiding a problem in the prior art that the terminal needs to measure the resource utilization in each transmission period of the data packet, and simplifying an operation procedure in which the terminal determines the target transmission resource in a congestion control mechanism.

Optionally, the first time period includes a plurality of transmission periods of the to-be-transmitted data packets.

Herein described is, the first time period may include the plurality of transmission periods for transmitting the to-be-transmitted data packets. The terminal may determine a transmission resource utilization threshold of the entire first time period based on the resource utilization of the first time period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one first time period. In the first time period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one first time period. In the first time period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, the second time period is the same as the first time period.

Optionally, the second time period is the same as the first time period, and a time length of the first time is a time length of a reservation period. The first time period includes a plurality of transmission periods of to-be-transmitted data packets.

In this embodiment of this application, the reservation period may include the plurality of transmission periods for transmitting the to-be-transmitted data packets. The terminal may determine a transmission resource utilization threshold of the entire reservation period based on the resource utilization of the reservation period, thereby avoiding a problem in the prior art that the terminal needs to measure the resource utilization in the transmission period of each data packet, and determine a transmission resource utilization threshold of the transmission period based on the resource utilization, and simplifying an operation procedure in which the terminal transmits the data packet in a congestion control mechanism.

Further, one transmission resource utilization threshold is used in one reservation period. In the reservation period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one reservation period. In the reservation period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, an end moment of the second time period is the same as that of the first time period.

Optionally, a start moment of the first time period is a moment at which the terminal performs resource selection or resource reselection.

Optionally, the start moment of the first time period is a moment at which a value of a counter of the terminal is zero, and the value of the counter is used to indicate a quantity of the to-be-transmitted data packets in a preset time period.

Further, the counter may be a sidelink resource reselection counter .

Optionally, the start moment of the first time period is a moment at which the to-be-transmitted data packet is mapped to a logical channel of the terminal.

Optionally, the resource utilization may be a CBR, and the transmission resource utilization threshold may be a CR limit.

Optionally, the to-be-transmitted data packet may be a periodically transmitted data packet, for example, a data packet of an SPT service.

Herein described is, the to-be-transmitted data packet is a data packet of a semi-persistent transmission SPT service, and the SPT service to which the to-be-transmitted data packet belongs includes at least one SPT service.

In the first time period, data packets of at least one SPT service share one transmission resource utilization threshold, thereby avoiding a problem in the prior art that a transmission resource utilization threshold needs to be determined in each data packet transmission, and simplifying an operation procedure in which the terminal transmits a data packet in a congestion control mechanism.

Herein described is, the SPT service to which the to-be-transmitted data packet belongs includes a plurality of SPT services, and the communications interface is specifically configured to send data packets of at least some of the plurality of SPT services in descending order of priorities of the plurality of SPT services on the target transmission resource.

Sending the data packets of at least some of the plurality of SPT services in descending order of the priorities of the plurality of SPT services meets the transmission resource utilization threshold, and ensures that a data packet of an SPT service with a high priority is sent first, so as to meet a transmission requirement of a data packet with a high priority.

Herein described is, the SPT service to which the to-be-transmitted data packet belongs includes the plurality of SPT services; the processor is further configured to determine that utilization of a transmission resource required for transmitting an SPT service whose priority is higher than a priority threshold in the plurality of SPT services is higher than the transmission resource utilization threshold; and the communications interface is further configured to: send request information to a base station, where the request information is used to request the base station to allocate a transmission resource to the SPT service whose priority is higher than the priority threshold in the plurality of SPT services.

Sending the request information to the base station, and requesting the base station to allocate a transmission resource to the SPT service whose priority is higher than the priority threshold in the plurality of SPT services meet the transmission resource utilization threshold, and ensure that a data packet of an SPT service with a high priority is first sent, so as to meet a transmission requirement of a data packet with a high priority.

Herein described is, the terminal further includes: an obtaining unit, configured to obtain, based on the resource utilization, a transmission parameter for transmitting the to-be-transmitted data packet; and the communications interface is specifically configured to send the to-be-transmitted data packet on the target transmission resource by using the transmission parameter.

Herein described is, the processor is specifically configured to select the target transmission resource in the first time period from the resource pool based on the transmission resource utilization threshold and the transmission parameter for transmitting the to-be-transmitted data packet.

Selecting, by the terminal, the target transmission resource from the resource pool based on the transmission resource utilization threshold and the transmission parameter for transmitting the to-be-transmitted data packet meets the transmission resource utilization threshold and makes the selected target transmission resource more proper.

Herein described is, the processor is specifically configured to determine the transmission resource utilization threshold based on the resource utilization and a mapping relationship between the resource utilization and the transmission resource utilization threshold.

The terminal independently determines the transmission resource utilization threshold based on the resource utilization and the mapping relationship between the resource utilization and the transmission resource utilization threshold, so as to reduce signaling interaction between the terminal and the base station, and reduce signaling overheads when the terminal determines the transmission resource utilization threshold.

Herein described is, the communications interface is further configured to: send the resource utilization to a base station; and receive the transmission resource utilization threshold sent by the base station.

The transmission resource utilization threshold is determined through signaling interaction between the terminal and the base station. This lowers a requirement for a capability of the terminal when the transmission resource utilization threshold is determined.

Herein described is a computer readable storage medium, where the computer readable storage medium is configured to store program code of a data packet transmission method, and the program code is used to execute a method instruction of the method.

### BRIEF DESCRIPTION OF DRAWINGS

FIG 1 is a schematic diagram of a method for determining a transmission resource based on a device-to-device D2D communications system;
FIG 2 is a schematic flowchart of a data packet transmission method according to an embodiment of this application;
FIG 3 is a schematic diagram of a time relationship between a first time period and a second time period according to an embodiment of this application;
FIG 4 is a schematic structural diagram of a terminal according to an embodiment of this application; and
FIG 5 is a schematic structural diagram of a terminal according to another embodiment of this application.

### DESCRIPTION OF EMBODIMENTS

It should be understood that the technical solutions in this application may be applied to various communications systems, such as a global system for mobile communications (GSM), a code division multiple access (CDMA) system, a wideband code division multiple access (WCDMA) system, a general packet radio service (GPRS), a long term evolution (LTE) system, a long term evolution advanced (LTE-A) system, a universal mobile telecommunications system (UMTS), new radio NR (New Radio Access Technology), 5G, a device-to-device (D2D) communications system, or an Internet of vehicles (V2V: Vehicle to Vehicle) communications system.

It should further be understood that in the embodiments of this application, a terminal, also referred to as a terminal device, may include but is not limited to a mobile station (MS), a mobile terminal, a mobile phone, user equipment (UE), a handset , an in-vehicle device, portable equipment, and the like. The terminal device may communicate with one or more core networks by using a radio access network (RAN). For example, the terminal device may be a mobile phone (or referred to as a "cellular" telephone), or a computer having a wireless communication function; the terminal device may further be a portable, pocket-sized, handheld, computer built-in, or in-vehicle mobile terminal.

In the embodiments of this application, a base station may be a base transceiver station (BTS) in GSM or CDMA, may be a NodeB in WCDMA, may be an evolved NodeB (eNB or e-NodeB) in LTE, or may be a gNB of NR or 5G. This is not specifically limited in the embodiments of this application.

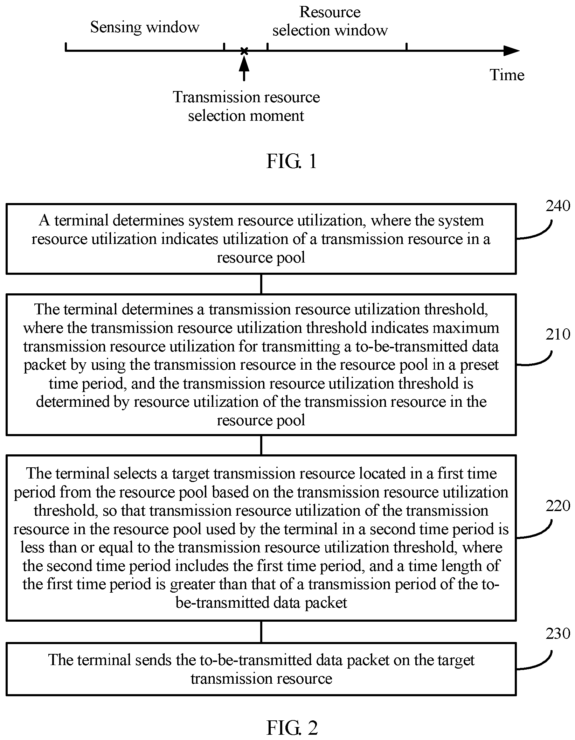

For ease of understanding, a method for determining a transmission resource based on a device-to-device D2D communications system is briefly described with reference to FIG. 1.

In a device-to-device (D2D) communications technology, a terminal may independently select a transmission resource from a resource pool to communicate with another terminal. In a process of selecting the transmission resource, the terminal may sense, in a sensing window, scheduling assignment (SA) information sent by the another terminal. The SA information may indicate time-frequency resource information for transmitting a data packet of an SPT service, transmission period information of the data packet of the SPT service, and the like. The terminal may select, from a selection window based on a sensing result of sensing the SA information sent by the another terminal, a transmission resource that can be used to transmit a data packet, namely, a target transmission resource. After determining the target transmission resource, the terminal transmits the data packet in an SPT manner. To be specific, the terminal reserves the target transmission resource, and sends the data packet of the SPT service by using the target transmission resource in a plurality of transmission periods of the SPT.

Based on the foregoing manner in which the terminal independently selects the transmission resource, if a large quantity of terminals send data by using the transmission resource in the resource pool, a communications system may be congested, and the plurality of terminals may select a same transmission resource from the resource pool to transmit the data packet of the SPT service, and consequently, overall performance of the communications system degrades. To ensure the performance of the communications system, a congestion control mechanism is introduced.

A congestion control mechanism 1 is a congestion control scheme controlled by a base station.

In a process of transmitting the data packet of the SPT service, the terminal needs to measure a CBR in a current transmission period in a transmission period of a data packet of each SPT service, and send a measurement result of the CBR in the current transmission period to the base station. The base station configures a transmission parameter set and a value range corresponding to each transmission parameter for the terminal based on the measurement result sent by the terminal. The transmission parameter set includes at least one of transmit power, a modulation and coding scheme (MCS), a quantity of physical resource blocks (PRB) available for the terminal, a quantity of retransmission times, a transmission period of an SPT service of the terminal, and a CR limit. The terminal receives the transmission parameter set sent by the base station, and selects a transmission resource based on the currently measured CBR and a service priority in the current transmission period, and the selected transmission resource meets a restriction on the transmission parameter set.

A congestion control mechanism 2 is a congestion control scheme in a terminal independent mode.

In a process of transmitting the data packet of the SPT service, the terminal needs to measure a CBR in a current transmission period in a transmission period of a data packet of each SPT service, and the terminal directly determines a transmission parameter based on the CBR measured in the current transmission period. The transmission parameter may include at least one of transmit power, an MCS, a quantity of PRBs available for the terminal, a quantity of retransmission times, a transmission period of an SPT service of the terminal, and a CR limit. The terminal sends the data packet of the SPT service on the target transmission resource by using the transmission parameter.

In the foregoing two congestion control mechanisms, the terminal needs to measure resource utilization in a transmission period of each SPT service, and obtain, based on each measured resource utilization, a transmission resource utilization threshold. If transmission resource utilization of the used transmission resource exceeds the transmission resource utilization threshold, the terminal discards a data packet or performs resource reselection. If the terminal discards a data packet, a transmission resource for originally transmitting the discarded data packet is in an idle mode. Consequently, another terminal may consider the transmission resource as an available transmission resource by mistake, and then periodically transmit a data packet of the another terminal on the transmission resource. Finally, a transmission conflict is caused when the terminal and the another terminal transmit respective data packets on a same transmission resource. If the terminal performs resource reselection, the terminal frequently performs resource reselection in a process of transmitting a data packet, thereby reducing stability of transmission resource utilization in an entire system.

To reduce, to some extent, a possibility that the transmission conflict is caused when the terminal transmits data packets on the same transmission resource at a same time, or to reduce, to some extent, a quantity of times of resource reselection performed by the terminal in a data packet transmission process, with reference to FIG. 2, the following describes in detail a data packet transmission method according to an embodiment of this application.

FIG. 2 is a schematic flowchart of a data packet transmission method according to an embodiment of this application. It should be understood that, FIG. 2 shows detailed steps or operations of the data packet transmission method, but these steps or operations are merely examples. Other operations or variants of the operations in FIG. 2 may further be performed in this embodiment of this application. In addition, the steps in FIG. 2 may be performed in an order different from that shown in FIG. 2, and not all the operations in FIG. 2 may need to be performed. The following describes in detail the steps of the method shown in FIG. 2.

210. A terminal determines a transmission resource utilization threshold, where the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool.

Specifically, the resource pool may include a plurality of transmission resources, and may be understood as one transmission resource set.

The to-be-transmitted data packet may include a plurality of data packets, and the plurality of data packets may be data packets transmitted by the terminal in the preset period on a same transmission resource. For example, the to-be-transmitted data packet may be a data packet of an SPT service.

Optionally, the resource pool may be a resource pool for D2D communication for the terminal in a system, for example, a resource pool that is used for D2D communication and that is used by a terminal to transmit a data packet.

Optionally, the transmission resource utilization threshold may be a CR limit.

Specifically, the CR limit described above may be a channel resource utilization limit, to be specific, maximum utilization of a channel resource that can be used by the terminal to transmit periodically transmitted data packets (for example, a data packet of an SPT service) in the preset time period.

Optionally, step 210 includes: determining, by the terminal, the transmission resource utilization threshold at a start moment of the first time period.

Optionally, the start moment of the first time period is a moment at which the terminal performs resource selection or resource reselection.

Optionally, the start moment of the first time period may be a moment at which the terminal has a to-be-transmitted data packet. To be specific, the start moment of the first time period may be a moment at which the to-be-transmitted data packet is mapped to a logical channel of the terminal or an arrival moment at which the to-be-transmitted data packet arrives at a MAC layer of the terminal.

Optionally, the start moment of the first time period is a moment at which a value of a counter of the terminal is zero, and the value of the counter is used to indicate a quantity of the to-be-transmitted data packets in a preset time period.

Further, the counter may be a sidelink resource reselection counter .

Specifically, the value of the counter may be used to indicate a quantity of to-be-transmitted data packets that further need to be transmitted by the terminal, a moment at which the terminal has no to-be-transmitted data packet that needs to be transmitted, and a moment at which the value of the counter is zero in the preset time period.

It should be noted that, the moment at which the value of the counter is zero may also be the moment at which the terminal performs resource selection or resource reselection.

It should further be understood that, the value of the counter is used to indicate the quantity of the to-be-transmitted data packets in the preset time period, to be specific, the value of the counter may be used to indicate a quantity of transmission periods of the to-be-transmitted data packets in the preset time period.

220. The terminal selects a target transmission resource in a first time period from the resource pool based on the transmission resource utilization threshold, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet.

Specifically, that the second time period includes the first time period may mean that the first time period is a time period within the second time period, or mean that the second time period is the same as the first time period. That the second time period is the same as the first time period may mean that a start moment of the second time period is the same as that of the first time period, and an end moment of the second time period is the same as that of the first time period.

Optionally, when the first time period is the same as the second time period, the time length of the first time period may be a time length of a reservation period, and the reservation period may include a plurality of transmission periods of to-be-transmitted data packets.

Specifically, the terminal may periodically determine a transmission resource utilization threshold by using the reservation period as a period, and transmit a to-be-transmitted data packet in the reservation period.

The terminal may determine a transmission resource utilization threshold of an entire reservation period based on the resource utilization, thereby avoiding a problem in the prior art that the terminal needs to measure the resource utilization in the transmission period of each data packet, and determine the transmission resource utilization threshold of the transmission period based on the resource utilization, and simplifying an operation procedure in which the terminal transmits the data packet in a congestion control mechanism.

Further, one transmission resource utilization threshold is used in one reservation period. In the reservation period, the transmission resource utilization threshold does not vary with the resource utilization. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal discards the data packet. As a result, a transmission resource for originally transmitting the discarded data packet is idle, and another terminal considers the transmission resource as an available transmission resource by mistake, and then periodically transmits a data packet on the transmission resource, finally causing a transmission conflict.

In addition, one transmission resource utilization threshold is used in one reservation period. In the reservation period, the transmission resource utilization threshold does not vary with the resource utilization. Therefore, a quantity of times of resource reselection performed by the terminal in a data packet transmission process is reduced to some extent, thereby improving stability of transmission resource utilization in an entire system. This avoids the following case: In the prior art, when a change in the resource utilization causes a decrease in the transmission resource utilization threshold of the terminal, and continuing to send the data packet by using a same transmission resource by the terminal causes the transmission resource utilization to be higher than a changed transmission resource utilization threshold, the terminal is triggered to perform resource reselection. As a result, the terminal frequently performs resource reselection in a data packet transmission process, thereby reducing stability of transmission resource utilization in an entire system.

Optionally, the first time period includes the plurality of transmission periods of the to-be-transmitted data packets.

For example, the first time period may be a time length corresponding to five transmission periods of the to-be-transmitted data packets, or the first time period may be a time length corresponding to four and a half transmission periods of the to-be-transmitted data packets.

Optionally, an end moment of the second time period is the same as that of the first time period.

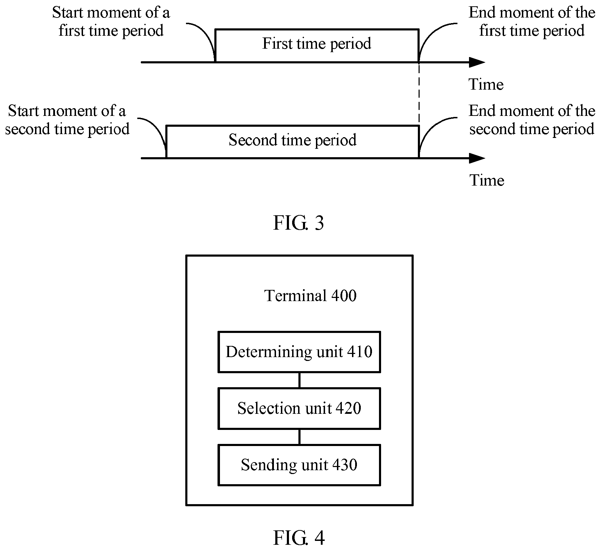

Specifically, the second time period may include the first time period, and the end moment of the second time period is the same as that of the first time period. To be specific, the start moment of the first time period may be later than that of the second time period in terms of time (refer to FIG. 3), or the start moment of the first time may be the same as that of the second time period.

230. The terminal sends the to-be-transmitted data packet on the target transmission resource.

Specifically, in the first time period, the terminal may send the to-be-transmitted data packet on the target transmission resource.

Optionally, in an embodiment, before step 210, the method further includes the following step:

240. The terminal determines resource utilization of the transmission resource in the resource pool.

It should be understood that, the resource utilization may be used to determine a transmission resource utilization threshold of the terminal in the second time period, and the resource utilization may be measured by the terminal at any moment before the start moment of the first time period. The resource utilization may also be measured by the terminal at the start moment of the first time period. This embodiment of this application sets no specific limitation on measurement time of the resource utilization.

Optionally, the resource utilization may be a CBR.

Specifically, the terminal may determine the CBR by detecting energy of a signal on a PRB or energy of a signal on a sub-channel. One sub-channel may include a plurality of PRBs that are consecutive in frequency domain.

Optionally, step 210 may include: determining, by the terminal, the transmission resource utilization threshold based on the resource utilization and a mapping relationship between the resource utilization and the transmission resource utilization threshold.

Specifically, the terminal may independently determine the transmission resource utilization threshold based on the resource utilization.

Optionally, the resource utilization is a first CBR, and the transmission resource utilization threshold is a first CR limit. Step 210 may further include: determining, by the terminal, the first CR limit based on the first CBR and a mapping relationship between the CBR and the CR limit.

Specifically, the first CBR may be a CBR that is always used in the first time period and that is used to determine a CR limit in the second time period.

It should be understood that, the first CBR may be a CBR measured by the terminal at a moment of resource selection or resource reselection. The first CBR may also be a CBR measured by the terminal at any moment before the resource selection or the resource reselection starts.

It should be understood that, there is a mapping relationship between the CBR and the CR limit. Different CBRs may be corresponding to different CR limits, and some CBRs in the different CBRs may be corresponding to one CR limit. This application sets no specific limitation on the mapping relationship between the CBR and the CR limit.

It should further be understood that, different terminals may be corresponding to different mapping relationships between the CBR and the CR limit. For example, for a first terminal, when the CBR is 0.7, the CR limit may be 0.2; for a second terminal, when the CBR is 0.7, the CR limit may be 0.25. The different terminals may also be corresponding to a same mapping relationship between the CBR and the CR limit. For example, for the first terminal, when the CBR is 0.7, the CR limit may be 0.2; for the second terminal, when the CBR is 0.7, the CR limit may also be 0.2. This is not specifically limited in this embodiment of this application.

Optionally, step 210 may further include: sending, by the terminal, the resource utilization to a base station, and receiving, by the terminal, the transmission resource utilization threshold sent by the base station.

Specifically, the terminal may send the resource utilization to the base station, and the base station configures the transmission resource utilization threshold for the terminal based on the resource utilization.

Optionally, the resource utilization is the CBR, and the transmission resource utilization threshold is the CR limit. Step 210 may further include: sending, by the terminal, the CBR to a base station; and receiving, by the terminal, a CR limit corresponding to the CBR sent by the base station, where the CR limit corresponding to the CBR is determined by the base station based on the CBR and the mapping relationship between the CBR and the CR limit.

Specifically, the CBR may be a CBR used to determine the CR limit in the second time period.

Optionally, the to-be-transmitted data packet is a data packet of a semi-persistent transmission SPT service, and the SPT service to which the to-be-transmitted data packet belongs includes at least one SPT service.

Specifically, if the SPT service to be transmitted by the terminal includes one SPT service, the time length of the first time period is greater than a time length of a transmission period for transmitting a data packet of the SPT service. If the SPT service to be transmitted by the terminal includes a plurality of SPT services, the first time period may include a plurality of transmission periods for transmitting data packets of the plurality of SPT services. For example, the SPT service to be transmitted by the terminal includes a first SPT service and a second SPT service. In this case, the first time period may include all transmission periods for transmitting data packets of the first SPT service and at least some transmission periods for transmitting data packets of the second SPT service. Alternatively, the first time period may include all transmission periods for transmitting the data packets of the second SPT service and at least some transmission periods for transmitting the data packets of the first SPT service. To be specific, when the to-be-transmitted SPT service includes the plurality of SPT services, in the first time period, a sum of transmission resource utilization for transmitting the plurality of data packets of the plurality of SPT services is less than or equal to a transmission resource utilization threshold, and the transmitting the plurality of data packets of the plurality of SPT services may share the transmission resource utilization threshold.

Optionally, in an embodiment, the SPT service to which the to-be-transmitted data packet belongs includes the plurality of SPT services, and the sending, by the terminal, the to-be-transmitted data packet on the target transmission resource includes: sending, by the terminal, data packets of at least some of the plurality of SPT services in descending order of priorities of the plurality of SPT services on the target transmission resource.

Specifically, in the first time period, the terminal sends data packets of at least some of the plurality of SPT services in descending order of priorities of the plurality of SPT services on the target transmission resource.

For example, the plurality of SPT services include a first SPT service, a second SPT service, and a third SPT service. A priority of the first SPT service may be the same as a priority of the second SPT service, and a priority of the third SPT service may be lower than the priority of the first SPT service and the priority of the second SPT service. In this case, the terminal may first send one SPT service that is randomly selected from the first SPT service and the second SPT service. After the terminal sends a data packet of the first SPT service and a data packet of the second SPT service, the terminal may continue to send a data packet of the third SPT service.

It should be understood that, the sending the data packets of at least some of the plurality of SPT services in descending order of priorities of the plurality of SPT services may be sending data packets of the plurality of SPT services in descending order of priorities of the plurality of SPT services, or sending data packets of some of the plurality of SPT services in descending order of priorities of the plurality of SPT services. To be specific, when the terminal sends the data packets of the plurality of SPT services in descending order of priorities of the plurality of SPT services on the target transmission resource, if the terminal does not completely send the data packets of the plurality of SPT services, utilization of a transmission resource for transmitting a data packet exceeds a transmission resource utilization threshold, and the terminal may send the data packets of some of the plurality of SPT services.

For example, the terminal determines, based on the CBR, that the CR limit (CR_limit) is CR_limit 3, and the SPT service to be transmitted by the terminal includes an SPT1 service and an SPT2 service. A priority PI corresponding to the SPT1 service is higher than a priority P2 corresponding to the SPT2 service. CR limit corresponding to the priority PI is CR limit 1, and CR limit corresponding to the priority P2 is CR limit 2. The terminal may first transmit a data packet of the SPT1 service corresponding to the priority PI. If CR_limit 1 of the SPT1 service corresponding to the priority PI is equal to CR limit 3, the terminal does not transmit a data packet of the SPT2 service corresponding to the priority P2. If CR limit 1 of the SPT1 service corresponding to the priority PI is less than CR limit 3, the terminal may use remaining transmission resource utilization (namely, CR limit 3 ― CR_limit 1) to transmit the data packet of the SPT2 service corresponding to the priority P2 until the transmission resource utilization used for transmitting the data packet of the SPT2 service is equal to CR limit 3 ― CR limit 1.

Optionally, in an embodiment, the method further includes: determining, by the terminal, that utilization of a transmission resource required for transmitting an SPT service whose priority is higher than a priority threshold in the plurality of SPT services is higher than the transmission resource utilization threshold; and sending, by the terminal, request information to a base station, where the request information is used to request the base station to allocate a transmission resource to the SPT service whose priority is higher than the priority threshold in the plurality of SPT services.

Specifically, the SPT service whose priority is higher than the priority threshold in the plurality of SPT services may be one SPT service, or may be a plurality of SPT services.

Optionally, in an embodiment, the method further includes: obtaining, by the terminal based on the resource utilization, a transmission parameter for transmitting the to-be-transmitted data packet; and the sending, by the terminal, the to-be-transmitted data packet on the target transmission resource includes: sending, by the terminal, the to-be-transmitted data packet on the target transmission resource by using the transmission parameter.

Specifically, in the first time period, the terminal may send the to-be-transmitted data packet on the target transmission resource by using the transmission parameter.

The transmission parameter includes at least one of transmit power required for transmitting the to-be-transmitted data packet, an MCS for transmitting the to-be-transmitted data packet, a quantity of PRBs required for transmitting the to-be-transmitted data packet, a quantity of retransmission times of transmitting the to-be-transmitted data packet, and a transmission period for transmitting the to-be-transmitted data packet.

It should be understood that when the to-be-transmitted data packet is a data packet of an SPT service, the transmission period in the transmission parameter may be a transmission period of the data packet of the SPT service.

Optionally, in an embodiment, the selecting, by the terminal, a target transmission resource from the resource pool based on the transmission resource utilization threshold includes: selecting, by the terminal, the target transmission resource from the resource pool based on the transmission resource utilization threshold and the transmission parameter for transmitting the to-be-transmitted data packet.

For example, when the transmission parameter includes the quantity of PRBs for transmitting the to-be-transmitted data packet, the terminal may select the target transmission resource based on the transmission resource utilization threshold and the quantity of PRBs required for transmitting the to-be-transmitted data packet. For another example, when the transmission parameter includes the transmission period for transmitting the to-be-transmitted data packet, the terminal may select the target transmission resource based on the transmission resource utilization threshold and the transmission period for transmitting the to-be-transmitted data packet. The terminal may determine, by detecting SA information sent by another terminal, a transmission period in which the another terminal transmits a data packet. The terminal may select a target transmission resource from a resource pool based on the transmission period in which the another terminal transmits a data packet and a transmission period in which the terminal transmits a data packet.

Optionally, in the first time period, the resource utilization changes, but the terminal does not reselect a transmission resource from the resource pool.

Specifically, in the first time period, regardless of whatever the resource utilization changes, the terminal is not triggered to reselect a transmission resource from the resource pool.

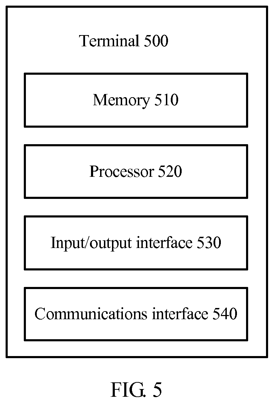

The foregoing describes in detail the data packet transmission method according to the embodiments of this application with reference to FIG. 1 to FIG. 3. The following describes in detail a terminal according to the embodiments of this application with reference to FIG. 4 and FIG. 5. It should be understood that, the terminal shown in FIG. 4 and FIG. 5 can implement all steps in FIG. 2. To avoid repetition, details are not described herein again.

FIG. 4 is a schematic block diagram of a data packet transmission terminal according to an embodiment of this application. A terminal 400 shown in FIG. 4 includes a determining unit 410, a selection unit 420, and a sending unit 430.

The determining unit 410 is configured to determine a transmission resource utilization threshold, where the transmission resource utilization threshold indicates maximum transmission resource utilization for transmitting a to-be-transmitted data packet by using a transmission resource in a resource pool in a preset period, and the transmission resource utilization threshold is determined by resource utilization of the transmission resource in the resource pool.

The selection unit 420 is configured to select a target transmission resource in a first time period from the resource pool based on the transmission resource utilization threshold determined by the determining unit, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet.

The sending unit 430 is configured to send the to-be-transmitted data packet on the target transmission resource selected by the selection unit.

Optionally, in an embodiment, a time length of the second time period is the same as that of the first time period.

Optionally, in an embodiment, an end moment of the second time period is the same as that of the first time period.

Optionally, in an embodiment, the determining unit is specifically configured to determine the transmission resource utilization threshold at a start moment of the first time period.

Optionally, in an embodiment, the start moment of the first time period is a moment at which the terminal performs resource selection or resource reselection.

Optionally, the start moment of the first time period is a moment at which a value of a counter of the terminal is zero, and the value of the counter is used to indicate a quantity of the to-be-transmitted data packets in a preset time period.

Further, the counter represents a sidelink resource reselection counter .

Optionally, in an embodiment, the start moment of the first time period is a moment at which the to-be-transmitted data packet is mapped to a logical channel of the terminal.

Optionally, in an embodiment, the to-be-transmitted data packet is a data packet of a semi-persistent transmission SPT service, and the SPT service to which the to-be-transmitted data packet belongs includes at least one SPT service.

Optionally, in an embodiment, the SPT service to which the to-be-transmitted data packet belongs includes a plurality of SPT services, and the sending unit is specifically configured to send data packets of at least some of the plurality of SPT services in descending order of priorities of the plurality of SPT services on the target transmission resource.

Optionally, in an embodiment, the SPT service to which the to-be-transmitted data packet belongs includes the plurality of SPT services; the determining unit is further configured to determine that utilization of a transmission resource required for transmitting an SPT service whose priority is higher than a priority threshold in the plurality of SPT services is higher than the transmission resource utilization threshold; and the sending unit is further configured to send request information to a base station, where the request information is used to request the base station to allocate a transmission resource to the SPT service whose priority is higher than the priority threshold in the plurality of SPT services.

Optionally, in an embodiment, the terminal further includes: an obtaining unit, configured to obtain, based on the resource utilization, a transmission parameter for transmitting the to-be-transmitted data packet; and the sending unit is specifically configured to send the to-be-transmitted data packet on the target transmission resource by using the transmission parameter.

Optionally, in an embodiment, the selection unit is specifically configured to select the target transmission resource in the first time period from the resource pool based on the transmission resource utilization threshold and the transmission parameter for transmitting the to-be-transmitted data packet.

Optionally, in an embodiment, the obtaining unit is specifically configured to determine the transmission resource utilization threshold based on the resource utilization and a mapping relationship between the resource utilization and the transmission resource utilization threshold.

Optionally, in an embodiment, the obtaining unit is specifically configured to: send the resource utilization to a base station; and receive the transmission resource utilization threshold sent by the base station.

Optionally, in an embodiment, in the first time period, the resource utilization changes, but the terminal does not reselect a transmission resource from the resource pool.

In the optional embodiments, the determining unit 410 and the selection unit 420 may be a processor 520, the sending unit 430 may be a communications interface 540, and the terminal device may further include an input/output interface 530 and a memory 510. Details are shown in FIG. 5.

FIG. 5 is a schematic block diagram of a terminal according to another embodiment of this application. A terminal 500 shown in FIG. 5 may include a memory 510, a processor 520, an input/output interface 530, and a communications interface 540. The memory 510, the processor 520, the input/output interface 530, and the communications interface 540 are connected by using an internal connection channel. The memory 510 is configured to store an instruction. The processor 520 is configured to execute the instruction stored in the memory 510, to control the input/output interface 530 to receive entered data and information, output data such as an operation result, and control the communications interface 540 to send a signal.

The processor 520 is configured to: determine a transmission resource utilization threshold, where the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool; and select a target transmission resource in a first time period from the resource pool based on the transmission resource utilization threshold, so that transmission resource utilization of the transmission resource in the resource pool used by the terminal in a second time period is less than or equal to the transmission resource utilization threshold, where the second time period includes the first time period, and a time length of the first time period is greater than that of a transmission period of the to-be-transmitted data packet.

The communications interface 540 is configured to send the to-be-transmitted data packet on the target transmission resource.

It should be understood that, in this embodiment of this application, the processor 520 may be a general-purpose central processing unit (CPU), a microprocessor, an application-specific integrated circuit (ASIC), or one or more integrated circuits, and is configured to execute a related program, to implement the technical solutions provided in the embodiments of this application.

It should further be understood that, the communications interface 540 uses, by way of example without limitation, a transceiver apparatus such as a transceiver to implement communication between the terminal 500 and another device or a communications network.

The memory 510 may include a read-only memory and a random access memory, and provide an instruction and data to the processor 520. A part of the processor 520 may further include a non-volatile random access memory. For example, the processor 520 may further store information about a device type.

In an implementation process, steps of the foregoing methods can be implemented by using a hardware integrated logic circuit in the processor 520, or by using instructions in a form of software. The data packet transmission method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 510, and the processor 520 reads information in the memory 510 and completes the steps of the foregoing methods in combination with hardware of the processor. To avoid repetition, details are not described herein again.

In the embodiments of this application, the terminal may select the target transmission resource by using a transmission resource utilization threshold in the first time period. To be specific, the terminal may not need to periodically measure the resource utilization using a transmission period of a data packet as a period, thereby avoiding a problem in the prior art that the terminal needs to measure the resource utilization in each transmission period of the data packet, and simplifying an operation procedure in which the terminal determines the target transmission resource in a congestion control mechanism.

It should be understood that in the embodiments of this application, "B corresponding to A" indicates that B is associated with A, and B may be determined based on A. However, it should further be understood that determining B based on A does not mean that B is determined based on A only, and B may also be determined based on A and/or other information.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

## Claims

1. A data packet transmission method, comprising:
determining (210), by a terminal, a transmission resource utilization threshold, wherein the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool;
selecting (220), by the terminal, a target transmission resource in a first time period from the resource pool based on the transmission resource utilization threshold, wherein a transmission resource utilization of the transmission resource in the resource pool used by the terminal in a second time period is less than or equal to the transmission resource utilization threshold, wherein the second time period comprises the first time period, and a time length of the first time period is greater than that of a transmission period of the to-be-transmitted data packet; and
sending (230), by the terminal, the to-be-transmitted data packet on the target transmission resource; wherein the to-be-transmitted data packet is a data packet of a semi-persistent transmission, SPT, service, wherein the SPT service to which the to-be-transmitted data packet belongs comprises a plurality of SPT services having different priorities; and
the sending, by the terminal, the to-be-transmitted data packet on the target transmission resource comprises:
sending, by the terminal, data packets of at least some of the plurality of SPT services in descending order of priorities of the plurality of SPT services on the target transmission resource.

2. The method according to claim 1, wherein the second time period is the same as the first time period.

3. The method according to claim 1 or 2, wherein an end moment of the second time period is the same as that of the first time period.

4. The method according to any one of claims 1 to 3, wherein the determining, by a terminal, a transmission resource utilization threshold comprises:
determining, by the terminal, the transmission resource utilization threshold at a start moment of the first time period.

5. The method according to any one of claims 1 to 4, wherein the SPT service to which the to-be-transmitted data packet belongs comprises the plurality of SPT services, and the method further comprises:
determining, by the terminal, that utilization of a transmission resource required for transmitting an SPT service whose priority is higher than a priority threshold in the plurality of SPT services is higher than the transmission resource utilization threshold; and
sending, by the terminal, request information to a base station, wherein the request information is used to request the base station to allocate a transmission resource to the SPT service whose priority is higher than the priority threshold in the plurality of SPT services.

6. A data packet transmitting apparatus (400), comprising:
a determining unit (410), configured to determine a transmission resource utilization threshold, wherein the transmission resource utilization threshold indicates maximum transmission resource utilization for transmitting a to-be-transmitted data packet by using a transmission resource in a resource pool in a preset time period, and the transmission resource utilization threshold is determined by resource utilization of the transmission resource in the resource pool;
a selection unit (420), configured to select a target transmission resource in a first time period from the resource pool based on the transmission resource utilization threshold determined by the determining unit, wherein a transmission resource utilization of the transmission resource in the resource pool used by the terminal in a second time period is less than or equal to the transmission resource utilization threshold, wherein the second time period comprises the first time period, and a time length of the first time period is greater than that of a transmission period of the to-be-transmitted data packet; and
a sending unit (430), configured to send the to-be-transmitted data packet on the target transmission resource selected by the selection unit; wherein the to-be-transmitted data packet is a data packet of a semi-persistent transmission, SPT, service,
wherein the SPT service to which the to-be-transmitted data packet belongs comprises a plurality of SPT services having different priorities; and
the sending unit is specifically configured to send data packets of at least some of the plurality of SPT services in descending order of priorities of the plurality of SPT services on the target transmission resource.

7. The apparatus according to claim 6, wherein the second time period is the same as the first time period.

8. The apparatus according to claim 6 or 7, wherein an end moment of the second time period is the same as that of the first time period.

9. The apparatus according to any one of claims 6 to 8, wherein the determining unit is specifically configured to determine the transmission resource utilization threshold at a start moment of the first time period.

10. The apparatus according to any one of claims 6 to 9, wherein the SPT service to which the to-be-transmitted data packet belongs comprises the plurality of SPT services;
the determining unit, further configured to determine that utilization of a transmission resource required for transmitting an SPT service whose priority is higher than a priority threshold in the plurality of SPT services is higher than the transmission resource utilization threshold; and the sending unit is further configured to send request information to a base station, wherein the request information is used
to request the base station to allocate a transmission resource to the SPT service whose priority is higher than the priority threshold in the plurality of SPT services.

## Patentansprüche

1. Datenpaketübertragungsverfahren, das Folgendes umfasst:
Bestimmen (210), durch ein Endgerät, eines Übertragungsressourcennutzungsschwellenwerts, wobei der Übertragungsressourcennutzungsschwellenwert eine maximale Übertragungsressourcennutzung zum Übertragen eines zu übertragenden Datenpakets durch Verwenden einer Übertragungsressource in einem Ressourcenpool in einer voreingestellten Zeitperiode angibt und der Übertragungsressourcennutzungsschwellenwert durch die Ressourcennutzung der Übertragungsressource in dem Ressourcenpool bestimmt wird;
Auswählen (220), durch das Endgerät, einer Zielübertragungsressource in einer ersten Zeitperiode aus dem Ressourcenpool basierend auf dem Übertragungsressourcennutzungsschwellenwert, wobei eine Übertragungsressourcennutzung der Übertragungsressource in dem Ressourcenpool, die durch das Endgerät in einer zweiten Zeitperiode verwendet wird, kleiner als oder gleich dem Übertragungsressourcennutzungsschwellenwert ist, wobei die zweite Zeitperiode die erste Zeitperiode umfasst und eine Zeitdauer der ersten Zeitperiode größer als die einer Übertragungsperiode des zu übertragenden Datenpakets ist; und
Senden (230), durch das Endgerät, des zu übertragenden Datenpakets auf der Zielübertragungsressource; wobei das zu übertragende Datenpaket ein Datenpaket eines Dienstes für eine semi-persistente Übertragung (semi-persistent transmission ― SPT) ist,
wobei der SPT-Dienst, zu dem das zu übertragende Datenpaket gehört, mehrere SPT-Dienste umfasst, die unterschiedliche Prioritäten aufweisen; und
das Senden, durch das Endgerät, des zu übertragenden Datenpakets auf der Zielübertragungsressource Folgendes umfasst:
Senden, durch das Endgerät, von Datenpaketen von wenigstens einigen der mehreren SPT-Dienste in absteigender Reihenfolge von Prioritäten der mehreren SPT-Dienste auf der Zielübertragungsressource.

2. Verfahren nach Anspruch 1, wobei die zweite Zeitperiode die gleiche wie die erste Zeitperiode ist.

3. Verfahren nach Anspruch 1 oder 2, wobei ein Endmoment der zweiten Zeitperiode der gleiche wie der der ersten Zeitperiode ist.

4. Verfahren nach einem der Ansprüche 1 bis 3, wobei das Bestimmen, durch ein Endgerät, eines Übertragungsressourcennutzungsschwellenwerts Folgendes umfasst:
Bestimmen, durch das Endgerät, des Übertragungsressourcennutzungsschwellenwerts an einem Startmoment der ersten Zeitperiode.

5. Verfahren nach einem der Ansprüche 1 bis 4, wobei der SPT-Dienst, zu dem das zu übertragende Datenpaket gehört, die mehreren SPT-Dienste umfasst und das Verfahren ferner Folgendes umfasst:
Bestimmen, durch das Endgerät, dass die Nutzung einer Übertragungsressource, die zum Übertragen eines SPT-Dienstes erforderlich ist, dessen Priorität höher als ein Prioritätsschwellenwert in den mehreren SPT-Diensten ist, höher als der Übertragungsressourcennutzungsschwellenwert ist; und
Senden, durch das Endgerät, von Anforderungsinformationen an eine Basisstation, wobei die Anforderungsinformationen verwendet werden, um anzufordern, dass die Basisstation eine Übertragungsressource an den SPT-Dienst vergibt, dessen Priorität höher als der Prioritätsschwellenwert in den mehreren SPT-Diensten ist.

6. Datenpaketübertragungseinrichtung (400), die Folgendes umfasst:
eine Bestimmungseinheit (410), die konfiguriert ist, um einen Übertragungsressourcennutzungsschwellenwert zu bestimmen, wobei der Übertragungsressourcennutzungsschwellenwert die maximale Übertragungsressourcennutzung zum Übertragen eines zu übertragenden Datenpakets durch Verwenden einer Übertragungsressource in einem Ressourcenpool in einer voreingestellten Zeitperiode angibt und der Übertragungsressourcennutzungsschwellenwert durch die Ressourcennutzung der Übertragungsressource in dem Ressourcenpool bestimmt wird;
eine Auswahleinheit (420), die konfiguriert ist, um eine Zielübertragungsressource in einer ersten Zeitperiode aus dem Ressourcenpool basierend auf dem Übertragungsressourcennutzungsschwellenwert auszuwählen, der durch die Bestimmungseinheit bestimmt wird, wobei eine Übertragungsressourcennutzung der Übertragungsressource in dem Ressourcenpool, die durch das Endgerät in einer zweiten Zeitperiode verwendet wird, kleiner als oder gleich dem Übertragungsressourcennutzungsschwellenwert ist, wobei die zweite Zeitperiode die erste Zeitperiode umfasst und eine Zeitdauer der ersten Zeitperiode größer als die einer Übertragungsperiode des zu übertragenden Datenpakets ist; und
eine Sendeeinheit (430), die konfiguriert ist, um das zu übertragende Datenpaket auf der Zielübertragungsressource zu senden, die durch die Auswahleinheit ausgewählt wird; wobei das zu übertragende Datenpaket ein Datenpaket eines Dienstes für die semi-persistente Übertragung (SPT) ist,
wobei der SPT-Dienst, zu dem das zu übertragende Datenpaket gehört, mehrere SPT-Dienste umfasst, die unterschiedliche Prioritäten aufweisen; und
die Sendeeinheit speziell konfiguriert ist, um Datenpakete von wenigstens einigen der mehreren SPT-Dienste in absteigender Reihenfolge von Prioritäten der mehreren SPT-Dienste auf der Zielübertragungsressource zu senden.

7. Einrichtung nach Anspruch 6, wobei die zweite Zeitperiode die gleiche wie die erste Zeitperiode ist.

8. Einrichtung nach Anspruch 6 oder 7, wobei ein Endmoment der zweiten Zeitperiode der gleiche wie der der ersten Zeitperiode ist.

9. Einrichtung nach einem der Ansprüche 6 bis 8, wobei die Bestimmungseinheit speziell konfiguriert ist, um den Übertragungsressourcennutzungsschwellenwert an einem Startmoment der ersten Zeitperiode zu bestimmen.

10. Einrichtung nach einem der Ansprüche 6 bis 9, wobei der SPT-Dienst, zu dem das zu übertragende Datenpaket gehört, die mehreren SPT-Dienste umfasst;
die Bestimmungseinheit ferner konfiguriert ist, um zu bestimmen, dass die Nutzung einer Übertragungsressource, die zum Übertragen eines SPT-Dienstes erforderlich ist, dessen Priorität höher als ein Prioritätsschwellenwert in den mehreren SPT-Diensten ist, höher als der Übertragungsressourcennutzungsschwellenwert ist; und die Sendeeinheit ferner konfiguriert ist, um Anforderungsinformationen an eine Basisstation zu senden, wobei die Anforderungsinformationen verwendet werden, um anzufordern, dass die Basisstation eine Übertragungsressource an den SPT-Dienst vergibt, dessen Priorität höher als der Prioritätsschwellenwert in den mehreren SPT-Diensten ist.

## Revendications

1. Procédé de transmission de paquet de données, comprenant :
la détermination (210), par un terminal, d'un seuil d'utilisation de ressource de transmission, le seuil d'utilisation de ressource de transmission indiquant l'utilisation de ressource de transmission maximale pour transmettre un paquet de données à transmettre en utilisant une ressource de transmission dans un groupe de ressources dans une période de temps prédéfinie, et le seuil d'utilisation de ressource de transmission est déterminé par l'utilisation de ressource de la ressource de transmission dans le groupe de ressources ;
la sélection (220), par le terminal, d'une ressource de transmission cible dans une première période de temps à partir du groupe de ressources sur la base du seuil d'utilisation de ressource de transmission, dans lequel une utilisation de ressource de transmission de la ressource de transmission dans le groupe de ressources utilisé par le terminal dans une seconde période de temps est inférieure ou égale au seuil d'utilisation de ressource de transmission, la seconde période de temps comprenant la première période de temps, et une durée de la première période de temps étant supérieure à celle d'une période de transmission du paquet de données à transmettre ; et
l'envoi (230), par le terminal, du paquet de données à transmettre sur la ressource de transmission cible ; dans lequel le paquet de données à transmettre est un paquet de données d'un service de transmission semi-persistant, SPT,
dans lequel le
service SPT auquel appartient le paquet de données à transmettre comprend une pluralité de services SPT ayant des priorités différentes ; et
l'envoi, par le terminal, du paquet de données à transmettre sur la ressource de transmission cible comprend :
l'envoi, par le terminal, de paquets de données d'au moins certains de la pluralité de services SPT par ordre décroissant de priorités de la pluralité de services SPT sur la ressource de transmission cible.

2. Procédé selon la revendication 1, dans lequel la seconde période de temps est la même que la première période de temps.

3. Procédé selon la revendication 1 ou 2, dans lequel un moment de fin de la seconde période de temps est le même que celui de la première période de temps.

4. Procédé selon l'une quelconque des revendications 1 à 3, dans lequel la détermination, par un terminal, d'un seuil d'utilisation de ressource de transmission comprend :
la détermination, par le terminal, du seuil d'utilisation de ressource de transmission à un moment de début de la première période de temps.

5. Procédé selon l'une quelconque des revendications 1 à 4, dans lequel le service SPT auquel appartient le paquet de données à transmettre comprend la pluralité de services SPT, et le procédé comprend en outre :
la détermination, par le terminal, du fait que l'utilisation d'une ressource de transmission requise permettant de transmettre un service SPT dont la priorité est supérieure à un seuil de priorité dans la pluralité de services SPT est supérieure au seuil d'utilisation de ressource de transmission ; et
l'envoi, par le terminal, d'informations de demande à une station de base, les informations de demande étant utilisées pour demander à la station de base d'attribuer une ressource de transmission au service SPT dont la priorité est supérieure au seuil de priorité dans la pluralité de services SPT.

6. Appareil de transmission de paquets de données (400), comprenant :
une unité de détermination (410), configurée pour déterminer un seuil d'utilisation des ressources de transmission, le seuil d'utilisation de ressource de transmission indiquant l'utilisation maximale de ressource de transmission permettant de transmettre un paquet de données à transmettre en utilisant une ressource de transmission dans un groupe de ressources dans une période de temps prédéfinie, et le seuil d'utilisation de ressource de transmission est déterminé par l'utilisation de ressource de la ressource de transmission dans le groupe de ressources ;
une unité de sélection (420), configurée pour sélectionner une ressource de transmission cible dans une première période de temps à partir du groupe de ressources sur la base du seuil d'utilisation de ressource de transmission déterminé par l'unité de détermination, une utilisation de ressource de transmission de la ressource de transmission dans le groupe de ressources étant utilisée par le terminal dans une seconde période de temps est inférieure ou égale au seuil d'utilisation de ressource de transmission, la seconde période de temps comprenant la première période de temps, et une durée de la première période de temps étant supérieure à celle d'une période de transmission du paquet de données à transmettre ; et
une unité d'envoi (430), configurée pour envoyer le paquet de données à transmettre sur la ressource de transmission cible sélectionnée par l'unité de sélection ; dans lequel le paquet de données à transmettre est un paquet de données d'un service de transmission semi-persistant, SPT,
dans lequel le service SPT auquel appartient le paquet de données à transmettre comprend une pluralité de services SPT ayant des priorités différentes ; et
l'unité d'envoi est spécifiquement configurée pour envoyer des paquets de données d'au moins certains de la pluralité de services SPT par ordre décroissant de priorités de la pluralité de services SPT sur la ressource de transmission cible.

7. Appareil selon la revendication 6, dans lequel la seconde période de temps est la même que la première période de temps.

8. Appareil selon la revendication 6 ou 7, dans lequel un moment de fin de la seconde période de temps est le même que celui de la première période de temps.

9. Appareil selon l'une quelconque des revendications 6 à 8, dans lequel l'unité de détermination est spécifiquement configurée pour déterminer le seuil d'utilisation des ressources de transmission à un moment de début de la première période de temps.

10. Appareil selon l'une quelconque des revendications 6 à 9, dans lequel le service SPT auquel appartient le paquet de données à transmettre comprend la pluralité de services SPT;
l'unité de détermination, configurée en outre pour déterminer que l'utilisation d'une ressource de transmission requise permettant de transmettre un service SPT dont la priorité est supérieure à un seuil de priorité dans la pluralité de services SPT est supérieure au seuil d'utilisation de ressource de transmission ; et l'unité d'envoi est en outre configurée pour envoyer des informations de demande à une station de base, les informations de demande étant utilisées pour demander à la station de base d'attribuer une ressource de transmission au service SPT dont la priorité est supérieure au seuil de priorité dans la pluralité de services SPT.
